(19) Europäisches Patentamt
European Patent Office
Office européen des brevets

(11) **EP 4 730 179 A1**

(12) **EUROPEAN PATENT APPLICATION**
published in accordance with Art. 153(4) EPC

(43) Date of publication:
**22.04.2026 Bulletin 2026/17**

(21) Application number: **24822535.1**

(22) Date of filing: **28.05.2024**

(51) International Patent Classification (IPC):
**G06F 21/60** (2013.01)

(86) International application number:
**PCT/CN2024/095704**

(87) International publication number:
**WO 2024/255583 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2023 CN 202310707303**

(71) Applicant: **Shenzhen TCL New Technology Co.,
Ltd.**
**Shenzhen, Guangdong 518052 (CN)**

(72) Inventors:
• **LUO, Kang**
**Shenzhen, Guangdong 518052 (CN)**
• **LI, Mingde**
**Shenzhen, Guangdong 518052 (CN)**

(74) Representative: **Murgitroyd & Company**
**165-169 Scotland Street**
**Glasgow G5 8PL (GB)**

(54) **DEVICE PRIVACY MANAGEMENT METHOD AND APPARATUS, ELECTRONIC DEVICE, AND STORAGE MEDIUM**

(57) Embodiments of the present disclosure disclose a device privacy management method. The method comprises: performing privacy protection level measurement on a device to be measured, so as to obtain a first privacy measurement result; performing privacy management level measurement on a supplier to which said device belongs, so as to obtain a second privacy measurement result; generating a privacy protection degree score according to the first privacy measurement result, the second privacy measurement result, and a preset score weight; and upgrading privacy protection of the device. Thus, privacy security and protection management is implemented.

Measuring the privacy management level of the supplier associated with the device under test to obtain the second privacy measurement result — 101

Measuring the privacy protection level of the device under test to obtain the first privacy measurement result — 102

Generating the privacy protection degree score of the device under test based on the first privacy measurement result, the second privacy measurement result, and preset scoring weights — 103

Generating the privacy protection degree score of the device under test based on the first privacy measurement result, the second privacy measurement result, and preset scoring weights — 104

FIG. 2

## Description

This application claims priority to Chinese Application No. 202310707303.6 on June 14, 2023, entitled "DEVICE PRIVACY MANAGEMENT METHOD AND APPARATUS, ELECTRONIC DEVICE, AND STORAGE MEDIUM", the contents of which are incorporated herein by reference in their entirety.

## FIELD OF THE INVENTION

Embodiments of the present disclosure relate to the field of computer technologies, and particularly to a device privacy management method, an apparatus, an electronic device, and a storage medium, wherein the storage medium includes a computer-readable storage medium.

## BACKGROUND

With the increase in global privacy protection legislation and the tightening of enforcement, enterprises are facing greater pressure in terms of privacy protection. As smart home technologies develop rapidly and a large number of smart home appliances enter thousands of households, their security and privacy protection have attracted widespread attention.

## Technical Problem

At present, the user data privacy protection of many products mainly targets the product itself, making it difficult to accurately assess the privacy protection status of the product and impossible to perform privacy and security protection management on the product.

## Technical solution

In a first aspect, embodiments of the present disclosure provide a device privacy management method. The device privacy management method includes:

performing a privacy protection level measurement on a device under test to obtain a first privacy measurement result;
performing a privacy management level measurement on a supplier associated with the device under test to obtain a second privacy measurement result;
generating a privacy protection degree score of the device under test based on the first privacy measurement result, the second privacy measurement result, and a preset scoring weight; and
upgrading the privacy protection of the device under test based on the privacy protection degree score.

In a second aspect, embodiments of the present disclosure further provide a device privacy management apparatus. The device privacy management apparatus includes:

a first measurement module configured to perform a privacy protection level measurement on a device under test to obtain a first privacy measurement result;
a second measurement module configured to perform a privacy management level measurement on a supplier associated with the device under test to obtain a second privacy measurement result;
a score generation module configured to generate a privacy protection degree score of the device under test based on the first privacy measurement result, the second privacy measurement result, and a preset scoring weight;
a privacy management module configured to upgrade the privacy protection of the device under test based on the privacy protection degree score.

In some embodiments of the present disclosure, the first measurement module comprises:

an acquisition unit configured to acquire a privacy security score of the device under test for a privacy protection item;
a first generation unit configured to generate the first privacy measurement result based on a score sub-weight corresponding to the privacy protection item and the privacy security score;
wherein the privacy protection item comprises at least one of a product compliance risk test item, a product privacy-security protection technology test item, a product adaptation-to-law test item, or a product privacy protection requirement degree test item.

In some embodiments of the present disclosure, when the privacy protection item is the product compliance risk test item, the acquisition unit comprises:

a configuration sub-unit configured to configure compliance risk test cases;
a testing sub-unit configured to test the device under test using the compliance risk test cases to obtain a compliance risk test result corresponding to a risk level score;
a first calculation sub-unit configured to calculate an average value of the risk level scores corresponding to the compliance risk test cases to obtain an average risk level score; and
a first generation sub-unit configured to use the average risk level score as the privacy security score of the device under test for the product compliance risk test item.

In some embodiments of the present disclosure, when the privacy protection item is the product privacy-security protection technology test item, the acquisition unit comprises:

a first determination sub-unit configured to identify privacy-security protection technology items supported by the device under test;
a second determination sub-unit configured to determine, for each privacy-security protection technology item, a type, strength, and quantity of a privacy-security protection technology applied;
an obtaining sub-unit configured to obtain a preset mapping relationship set, the preset mapping relationship set comprising mapping relationships among types, strengths, and quantities of the privacy-security protection technologies and corresponding security scores;
a third determination sub-unit configured to determine a security score based on the preset mapping relationship set and based on the type, strength, or quantity of the privacy-security protection technology applied by each privacy-security protection technology item;
a second calculation sub-unit configured to calculate an average value of the security scores of the privacy-security protection technology items to obtain an average security score; and
a second generation sub-unit configured to use the average security score as the privacy security score of the device under test for the product privacy-security protection technology test item.

In some embodiments of the present disclosure, when the privacy protection item is the product adaptation-to-law test item, the acquisition unit comprises:

a region determination sub-unit configured to determine a target region in which the device under test is to be launched;
a baseline determination sub-unit configured to determine a target legal baseline required by the target region; and
a score determination sub-unit configured to determine the privacy security score of the device under test based on an actual legal baseline currently satisfied by the device under test and the target legal baseline.

In some embodiments of the present disclosure, the second measurement module comprises:

a supplier determination unit configured to determine the supplier associated with the device under test;
a management-level determination unit configured to perform a measurement on a privacy management level of the supplier based on a reference privacy information management system and a privacy maturity model to obtain a privacy management level score;
a first matching unit configured to match a reference software security development lifecycle with an actual software security development lifecycle of the device under test to obtain a first matching result;
a second matching unit configured to match a reference research-and-development privacy protection design process with an actual research-and-development privacy protection design process of the device under test to obtain a second matching result;

a research-and-development level determination unit configured to obtain a research-and-development design privacy control score based on the first matching result and the second matching result;
a second generation unit configured to generate the second privacy measurement result based on the privacy management level score and the research-and-development design privacy control score.

In some embodiments of the present disclosure, the privacy management module comprises:

a protection-technology determination unit configured to determine a current privacy protection technology corresponding to the privacy protection item of the device under test when the privacy protection degree score does not satisfy a scoring threshold;

a protection-technology modification unit configured to modify the current privacy protection technology to obtain a target privacy protection technology;

a measurement-result updating unit configured to perform a re-measurement based on the target privacy protection technology to obtain an updated first privacy measurement result;

a score updating unit configured to multiply the updated first privacy measurement result by a first scoring weight to obtain a first protection degree score, multiply the second privacy measurement result by a second scoring weight to obtain a second protection degree score, and add the first protection degree score and the second protection degree score to obtain an updated privacy protection degree score;

a privacy management sub-unit configured to upgrade the privacy protection of the device under test based on the updated privacy protection degree score.

In a third aspect, embodiments of the present disclosure further provide an electronic device. The electronic device comprises a memory, a processor, and computer program stored in the memory and executable on the processor. When the computer program executed by the processor, the computer program implements the steps of the device privacy management method of the first aspect or implements the steps of the device privacy management method of the third aspect.

In a fourth aspect, embodiments of the present disclosure further provide a storage medium. The storage medium comprises a computer-readable storage medium on which a computer program is stored. When executed by a processor, the computer program implements the steps of the device privacy management method described above.

In a fifth aspect, embodiments of the present disclosure further provide a computer program product or computer program. The computer program product or computer program comprises computer instructions stored on a computer-readable storage medium. When executed by a processor of computer equipment, the computer instructions cause the computer equipment to perform the methods provided in the various optional implementations of the present disclosure.

Advantageous Effects

Embodiments of the present disclosure perform a privacy protection level measurement on a device under test to obtain a first privacy measurement result, perform a privacy management level measurement on a supplier associated with the device under test to obtain a second privacy measurement result, generate a privacy protection degree score of the device under test based on the first and second privacy measurement results, and upgrade the privacy protection of the device under test based on the privacy protection degree score. By measuring the privacy management level of the supplier to obtain the second privacy measurement result and generating the privacy protection degree score based on both the second privacy measurement result and the first privacy measurement result associated with the device itself, the embodiments enrich the dimensions used for assessing privacy protection of a product. Compared with conventional approaches that evaluate only the privacy level of the product itself, the embodiments improve the accuracy of privacy protection assessment results and facilitate implementing privacy and security protection management for the product.

BRIEF DESCRIPTION OF THE DRAWINGS

In order to more clearly illustrate the technical solutions in the embodiments of the present disclosure, the drawings to be used in the description of the embodiments are briefly introduced below. It is obvious that the drawings in the following description merely show some embodiments of the present disclosure. For those skilled in the art, other drawings can also be obtained based on these drawings without any inventive effort.

FIG. 1 is a schematic diagram of a scenario of a device privacy management method according to embodiments of the present disclosure.

FIG. 2 is a flowchart illustrating a device privacy management method according to embodiments of the present disclosure.

FIG. 3 is a schematic diagram illustrating privacy-security protection technology items and corresponding security scores according to embodiments of the present disclosure.

FIG. 4 is an architectural diagram illustrating device privacy management according to embodiments of the present disclosure.

FIG. 5 is another schematic diagram illustrating a device privacy management method according to embodiments of the present disclosure.

FIG. 6 is a structural diagram of a device privacy management apparatus according to embodiments of the present disclosure.

FIG. 7 is a block diagram of an electronic device according to embodiments of the present disclosure.

DETAILED DESCRIPTION OF THE PRESENT DISCLOSURE

The technical solutions of the present disclosure will be described clearly and completely below with reference to the accompanying drawings. It is apparent that the embodiments described herein are only a portion of the embodiments of the invention and are not intended to represent all possible embodiments. Based on the embodiments of the invention, all other embodiments obtained by those skilled in the art without requiring inventive effort shall fall within the scope of protection of the present disclosure.

Embodiments of the present disclosure provide a device privacy management method, apparatus, electronic device, and storage medium. Specifically, embodiments of the present disclosure provide a device privacy management apparatus applicable to electronic devices. The electronic device includes a terminal, and the terminal may include, but is not limited to, a mobile phone, tablet computer, computer, or television.

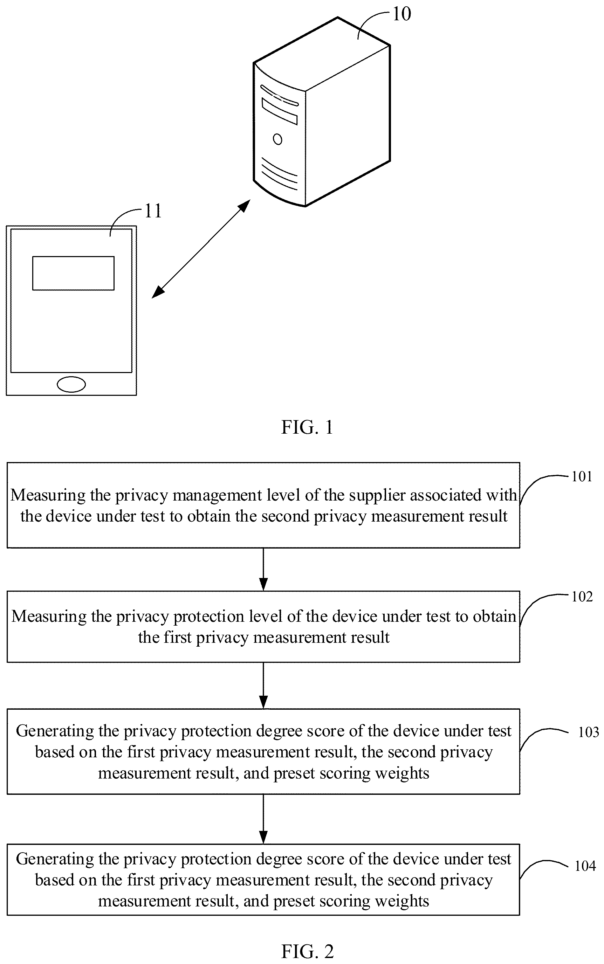

With reference to FIG. 1, by taking a terminal device executing the device privacy management method as an example, the method may be performed as follows:
A server 10 acquires configuration parameter information of a device under test 11. The server 10 performs a privacy protection level measurement on a device under test 11 according to the configuration parameter information to obtain a first privacy measurement result.

Subsequently, the server 10 acquires supplier information of the device under test and performs a privacy management level measurement on the supplier to obtain a second privacy measurement result.

The server 10 then generates a privacy protection degree score based on the first and second privacy measurement results, and the privacy protection of the device under test is upgraded based on the privacy protection degree score.

It should be understood that by performing a privacy management level measurement on the supplier to obtain the second privacy measurement result, and by generating the privacy protection degree score based on both the second privacy measurement result and the first privacy measurement result associated with the device itself, the embodiments enrich the dimensions used for evaluating privacy protection of a product. Compared with conventional solutions that evaluate only the privacy level of the product itself, the embodiments enhance the accuracy of privacy protection assessment and facilitate implementing privacy and security protection management for the product.

Detailed descriptions are provided below. It should be noted that the order of descriptions of the following embodiments is not intended to denote any order of preference among the embodiments.

With reference to FIG. 2, FIG. 2 is a flowchart illustrating the device privacy management method according to embodiments of the present disclosure. The device privacy management method includes Step 101-Step 104.

Step 101: Performing a privacy protection level measurement on the device under test to obtain a first privacy measurement result.

It should be noted that the privacy protection level of the device refers to a level of privacy protection of user data provided by the device during use. The level is determined by configuration parameters of the device during use. In other words, the first privacy measurement result is an evaluation result obtained with respect to the device itself.

The device under test refers to a device that requires privacy protection assessment. Examples include a device produced and ready for shipment, a device used for research and development testing, or a device that exhibits privacy-related security issues during operation and therefore requires testing.

Step 102: Performing a privacy management level measurement on a supplier associated with the device under test to obtain a second privacy measurement result.

It should be noted that the privacy management level of the supplier refers to the supplier's level of control over privacy protection. The supplier is an enterprise that develops or manufactures the device.

It will be appreciated that by measuring the privacy management level of the enterprise that manufactures the device, the privacy protection level of the device can be analyzed from additional dimensions. For example, the higher the privacy management control level of the enterprise, the higher the privacy protection level of the corresponding product tends to be.

Step 103: Generating the privacy protection degree score of the device under test based on the first privacy measurement result, the second privacy measurement result, and a preset scoring weight.

It will be understood that the privacy protection degree score reflects the level of userdata privacy protection provided by the device. A higher score indicates better privacy protection of the device or product, while a lower score indicates poorer privacy protection.

By generating the privacy protection degree score from measurement results across multiple dimensions, the method enables multi-dimensional evaluation and scoring of privacy protection for the device, thereby improving the accuracy of the privacy protection degree score.

The scoring weight represents the proportion attributed to each privacy measurement result. For example, in some embodiments of the present disclosure, the scoring weights for the first privacy measurement result and the second privacy measurement result are each 50%. The scoring weight may be flexibly adjusted as needed, and no limitation is imposed on any particular value.

Step 104: Upgrading the privacy protection of the device under test based on the privacy protection degree score.

By obtaining the privacy protection degree score, the device may be upgraded in terms of privacy protection based on the score. For example, when the privacy protection degree score is low, the device may require enhancement of its privacy protection technologies, protection strengths, or other related parameters to improve the score.

Correspondingly, the privacy protection degree score may also be used to determine whether the device is allowed to be introduced into a system environment. For example, when the privacy protection degree score is below a required level, introduction of the device may be rejected; only when the score meets a required standard will the device be allowed to be introduced. Device introduction may refer to importing, purchasing, or otherwise incorporating the device.

By obtaining the second privacy measurement result based on the supplier's privacy management level and generating the privacy protection degree score based on both the second privacy measurement result and the first privacy measurement result related to the device itself, the method enriches the evaluation dimensions for product privacy protection. Compared with conventional approaches that consider only the privacy level of the product itself, the method improves accuracy of privacy protection assessment and facilitates privacy and security protection management for the product.

Optionally, in some embodiments of the present disclosure, the first privacy measurement result reflects the privacy score of the device during operation. Therefore, by obtaining the privacy security score of the device under test for each privacy protection item, the first privacy measurement result may be derived. Optionally, In these embodiments, the step of "performing a privacy protection level measurement on the device under test to obtain the first privacy measurement result" may comprise:

acquiring the privacy security score of the device under test for a privacy protection item; and
generating the first privacy measurement result based on a score sub-weight corresponding to the privacy protection item and the privacy security score.

The privacy protection item comprises at least one of a product compliance risk test item, a product privacy-security protection technology test item, a product adaptation-to-law test item, or a product privacy protection requirement degree test item.

The privacy protection items represent the primary categories of testing for the device, and they enable privacy security evaluation from different dimensions.

The first privacy measurement result is obtained dynamically based on the aggregated privacy security scores of the device across the various privacy protection items.

Correspondingly, the score sub-weight represents the weighting applied to each privacy protection item. For example, when there are four privacy protection items, each score sub-weight may be 25%. The score sub-weight may be flexibly adjusted as needed.

In some embodiments of the present disclosure, when the privacy protection item is the product compliance risk test item, the step of "acquiring the privacy security score of the device under test" may comprise:

configuring compliance risk test cases;
testing the device under test based on the compliance risk test cases to obtain a compliance risk test result, where the compliance risk test result corresponds to a risk-level score;
calculating an average value of the risk-level scores corresponding to the compliance risk test cases to obtain an average risk-level score; and
using the average risk-level score as the privacy security score of the device under test for the product compliance risk test item.

Compliance risk test cases are designed specifically for evaluating the compliance-related risks of the device under test. By executing these test cases, risk information for the product compliance dimension may be obtained. Each compliance risk test case may include a target testing item, a set of testing documents, and testing input data.

Multiple compliance risk test cases may be included. Each test case corresponds to a test result expressed as a score. The score may range from 0 to 5, with different scores representing different risk levels. For example: Severe: 0; High risk: 1; Medium risk: 2; Low risk: 4; No risk (pass): 5.

Correspondingly, the privacy security score for the product compliance risk test item of the device may be derived from a combination of compliance risk test results across multiple test cases. For example, the privacy security score for compliance risk detection may be represented as:

$$\text{Compliance Risk Privacy Security Score} = \sum_{i=1}^{N} L_i \; / \; \text{N} \; ,$$

where $L_i$ represents the risk-level score of the i-th test case, and N represents the total number of test cases. Thus, the mean value of test results across multiple compliance risk test cases serves as the privacy security score for the product compliance risk test item.

It should be noted that the product privacy-security protection technology test item evaluates the privacy-security protection technologies configured on the device. The evaluation may consider factors such as the type, strength, or number of privacy protection technologies applied. In some embodiments of the present disclosure, when the privacy protection item is the product privacy-security protection technology test item, the step of "acquiring the privacy security score of the device under test" comprises:

identifying privacy-security protection technology items supported by the device under test;
for each privacy-security protection technology item, determining the type, strength, and quantity of the privacy-security protection technology applied;
obtaining a preset mapping relationship set, including mapping relationships among preset types, strengths, and quantities of privacy-security protection technologies and corresponding security scores;
determining a security score based on the preset mapping relationship set and based on the type, strength, or quantity of the privacy-security protection technology applied;
calculating an average value of security scores across all privacy-security protection technology items to obtain an average security score; and
using the average security score as the privacy security score of the device under test for the product privacy-security protection technology test item.

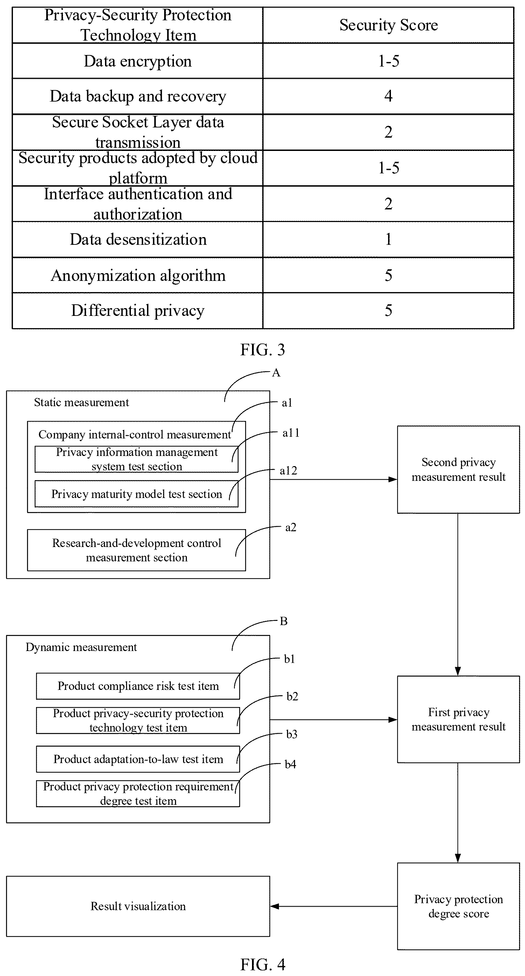

It should be noted that the privacy-security protection technology items are protection technology categories employed by the device to achieve privacy security. With reference to FIG. 3 illustrating various privacy-security protection technology items and their corresponding security scores, the items may include data encryption, data backup and recovery, Secure Socket Layer-based data transmission, security products adopted by a cloud platform, interface authentication and authorization, data desensitization, anonymization algorithms, differential privacy, and others. For each privacy-security protection technology item, the security score may be determined based on the type, protection strength, or number of applied technologies.

For example, the more secure the type of protection technology, the stronger the protection strength, or the greater the number of applied protection technologies, the higher the corresponding security score. In embodiments of the present disclosure, the security score for each privacy-security protection technology item may be obtained based on predefined mapping relationships among privacy-security protection technology types, strengths, quantities, and security scores. The average of these scores then represents the privacy security score for the product privacy-security protection technology test item.

Accordingly, the privacy security score for the product privacy-security protection technology test item may be derived from the security scores of multiple privacy-security protection technology items. For example:

$$\text{Product Privacy-Security Protection Technology Score} = \sum_{i=1}^{N} L_i / N,$$

where $L_i$ represents the security score of the i-th privacy-security protection technology item.

It should be noted that the product adaptation-to-law test item evaluates whether the device complies with legal requirements of a particular country or region, especially in relation to privacy and data protection law. The evaluation determines whether the privacy-related requirements of the target legal baseline are satisfied. In some embodiments of the present disclosure, when the privacy protection item is the product adaptation-to-law test item, the step of "acquiring the privacy security score of the device under test" comprises:

determining a target region where the device under test is to be launched;
determining a target legal baseline required by the target region;
determining the privacy security score of the device under test based on a comparison between the actual legal baseline currently satisfied by the device and the target legal baseline.

The legal baseline refers to the minimum legal requirements applicable to the device. In embodiments of the present disclosure, the legal baseline refers primarily to privacy law requirements applicable to the device. Based on a comparison between the actual legal baseline applicable to the device and the target legal baseline of the region in which the device is to be launched, the privacy security score for the product adaptation-to-law test item may be obtained. For example, if Country A has low or no privacy law requirements, but the device's privacy protection measures exceed Country A's legal baseline, the score may be 5. If Country B has stringent privacy requirements, but the device fails to implement corresponding privacy protection measures, the score may be 0.

In some embodiments of the present disclosure, the privacy protection requirement degree of the device may further be determined based on the product type. Each type of product corresponds to a different privacy protection requirement degree. Accordingly, when the privacy protection item is the product privacy protection requirement degree test item, the step of "acquiring the privacy security score of the device under test" comprises:

> determining the product type of the device under test;
> determining the product privacy protection requirement degree corresponding to the device under test according to the product type and a mapping relationship; and
> using the product privacy protection requirement degree as the privacy security score of the device under test for the product type.

The mapping relationship includes a preset mapping between product types and corresponding product privacy protection requirement degrees.

It will be understood that the mapping relationship may be predefined based on the level of privacy protection required for different product types. For example: smart lighting controllers, smart curtains, smart range hoods, and Bluetooth temperature/humidity sensors may correspond to a privacy protection requirement degree of 1; smart air conditioners, smart refrigerators (without screens), smart washing machines, smart air purifiers, smart ventilation systems, and Bluetooth body-fat scales may correspond to 2; smart sweeping robots (without cameras) and smart refrigerators (with screens) may correspond to 3; smart televisions and smart gateways may correspond to 4; smart door locks, smart cameras, smart doorbells, smart peephole viewers, smart sweeping robots (with cameras), smart watches, and smart phones may correspond to 5.

It should be noted that the second privacy measurement result is derived from the privacy management level of the enterprise that develops or designs the device and from the evaluation of the enterprise's research-and-development design process. The privacy management level and the design process evaluation generally reflect the level of privacy protection of the resulting devices. For example, when an enterprise has a high privacy management level and a standardized research-and-development design process, the devices produced by that enterprise tend to exhibit better privacy protection. Therefore, the enterprise's evaluation results may serve as a reference for evaluating the privacy protection of the device. Optionally, in some embodiments of the present disclosure, the step of "performing a privacy management level measurement on the supplier associated with the device under test to obtain the second privacy measurement result" comprises:

> determining the supplier associated with the device under test;
> measuring the privacy management level of the supplier based on a reference privacy information management system and a privacy maturity model to obtain a privacy management level score;
> matching a reference software security development lifecycle with the actual software security development lifecycle of the device under test to obtain a first matching result;
> matching a reference research-and-development privacy protection design process with the actual research-and-development privacy protection design process of the device under test to obtain a second matching result;
> obtaining a research-and-development design privacy control score based on the first matching result and the second matching result;
> generating the second privacy measurement result based on the privacy management level score and the research-and-development design privacy control score.

The matching result reflects the degree of alignment between two compared objects and may be expressed as a percentage or a decimal between 0 and 1. For example: when the percentage of the first matching result is high, the reference and actual software security development lifecycles are relatively close or consistent; when the percentage is low, the two lifecycles share low similarity; similarly, when the percentage of the second matching result is high, the reference and actual privacy protection design processes are closely aligned or consistent; when the percentage is low, the two privacy protection design processes are largely different or have low overlap. A percentage may be used to represent the degree of matching between the two comparison objects.

Correspondingly, the first matching result and the second matching result may be combined using weighted proportions to obtain the research-and-development design privacy control score. For example, the percentage values corresponding to the two matching results may be multiplied by their respective weights and then added together to obtain the final research-and-development design privacy control score.

It will be understood that the privacy management level score reflects the level of privacy management of the enterprise, whereas the research-and-development design privacy control score reflects the level of privacy control applied by the enterprise during the device's research and development process.

The Software Security Development Life Cycle (SSDLC) and the Privacy by Design (PbD) design process have corresponding reference standards. By determining whether the enterprise satisfies these standards, the research-and-development design privacy control score may be evaluated.

Correspondingly, with respect to the privacy management level score, the enterprise's privacy management level may be evaluated based on whether it satisfies relevant privacy information management systems or based on privacy maturity models. For example, the ISO27701 privacy management system may be used to assess the enterprise's overall privacy management level, producing a management system evaluation score. Likewise, classical privacy maturity models such as ISC2, NIST, GAPP, or CNIL may be used to produce a corresponding privacy maturity model evaluation score.

Correspondingly, with respect to the research-and-development design privacy control score, the evaluation may be based on the device's research-and-development lifecycle and the privacy protection design process. For example, the enterprise's SSDLC level may be assessed to obtain a development lifecycle evaluation score; the enterprise's PbD design process may be assessed to obtain a privacy design process evaluation score.

Correspondingly, after obtaining the scores of the individual evaluation items, the scores may be fused based on their corresponding weights to obtain the privacy protection degree score. With reference to FIG. 4, FIG. 4 illustrates the architecture of device privacy management according to embodiments of the present disclosure. The architecture includes static measurement module A, dynamic measurement module B, and result visualization module C. Static measurement module A is used for evaluating the privacy management level of the enterprise that develops or designs the device under test. Dynamic measurement module B is used for evaluating dynamic privacy data of the device during operation. Result visualization module C is used for visually presenting the privacy protection degree score obtained by fusing the outputs of static measurement module A and dynamic measurement module B. In some embodiments of the present disclosure, the fusion weights of static measurement module A and dynamic measurement module B are each 50%.

Correspondingly, the static measurement module A further includes company internal-control measurement portion a1 and research-and-development control measurement portion a2, each accounting for 50%. Company internal-control measurement portion a1 includes privacy information management system testing portion all and privacy maturity model testing portion al2. The management system evaluation score of privacy information management system testing portion all accounts for 80% of company internal-control measurement portion a1, while the model evaluation score of privacy maturity model testing portion al2 accounts for the remaining 20%.

For example, the second privacy measurement result St of static measurement module A may be expressed as:

St = (management system evaluation score $\times$ 0.8 + maturity model evaluation score $\times$ 0.2) $\times$ 0.5 + (research-and-development control measurement score $\times$ 0.5).

Correspondingly, dynamic measurement module B includes product compliance risk test item b1, product privacy-security protection technology test item b2, product adaptation-to-law test item b3, and product privacy protection requirement degree test item b4. The fusion weights of these items in dynamic measurement module B are 40%, 40%, 10%, and 10%, respectively.

For example, the first privacy measurement result Dy of dynamic measurement module B may be expressed as:

Dy = (compliance risk detection score $\times$ 0.4) + (product privacy-security protection technology score $\times$ 0.4) + (legal adaptation score $\times$ 0.1) + (1 / selected product-type privacy protection requirement strength $\times$ 0.1).

In some embodiments of the present disclosure, when upgrading the privacy protection of the device under test based on the privacy protection degree score, the privacy protection data of the device may be adjusted to obtain a new privacy protection degree score. Based on the change in the new privacy protection degree score, suitable privacy protection data for the device under test may be determined. Accordingly, in some embodiments, the step of "upgrading the privacy protection of the device under test based on the privacy protection degree score" comprises:

determining a current privacy protection technology corresponding to a privacy protection item of the device under test;

modifying the current privacy protection technology to obtain a target privacy protection technology;

updating the first privacy measurement result based on the target privacy protection technology to obtain an updated first privacy measurement result;

generating an updated privacy protection degree score based on the updated first privacy measurement result and the second privacy measurement result;

upgrading the privacy protection of the device under test based on the updated privacy protection degree score.

Through selecting or adding different privacy protection technologies, the impact of various privacy protection technologies on the privacy protection score of the product may be examined to determine whether the required privacy protection level for the target country is satisfied.

It will be understood that embodiments of the present disclosure implement an engineeringoriented configuration of the privacy-security protection evaluation process for devices by combining static measurement, dynamic measurement, and result visualization. Based on this process, privacy-security protection evaluations for devices may be performed. The evaluation process reduces professional skill requirements for operators, lowers application cost, and enables privacy-security evaluation of devices from multiple dimensions, including enterpriselevel and device-level factors. The dynamic measurement portion also allows adjusting the privacy protection technologies applied to different privacy protection items to obtain different privacy protection degree scores, enabling decisions regarding the cost and the extent of privacy protection, as well as whether local legal and regulatory requirements are satisfied.

Correspondingly, after evaluating the privacy-security of the device, the device may be improved through appropriate privacy-security enhancements, thereby yielding devices with better privacy protection performance. When users use the device for communication or other functions, user data may be better protected and privacy security improved.

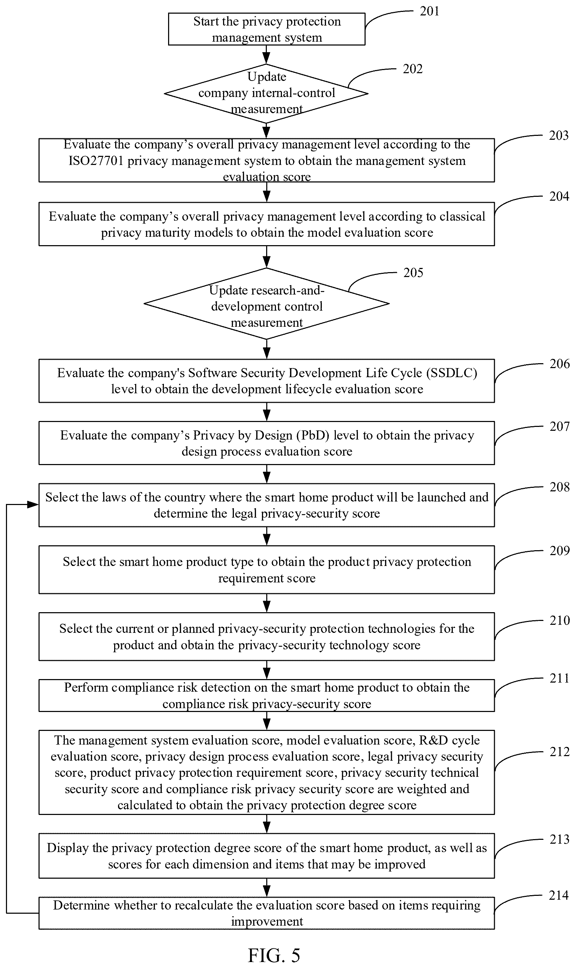

With reference to FIG. 5 illustrating another process flow of the device privacy management method according to embodiments of the present disclosure. The process comprises step 201-step 213.

Step 201: Starting the privacy protection management system.

The static measurement portion is started first.

Step 202: Determining whether to update the company internal-control measurement. If yes, step 203 is performed.

The company internal-control measurement is ordinarily updated annually and does not require updating each time. The result remains largely unchanged throughout the year. Thus, if no update is selected, the historical company internal-control measurement result may be reused.

Step 203: Evaluating the company's overall privacy management level according to the ISO27701 privacy management system to obtain a management system evaluation score.

Step 204: Evaluating the company's overall privacy management level according to classical privacy maturity models to obtain a model evaluation score. The privacy maturity models include ISC2, NIST, GAPP, and CNIL.

Step 205: Determining whether to update the research-and-development control measurement. If yes, step 206 is performed.

The research-and-development control measurement is also updated annually and does not require updating each time. The result remains largely stable throughout the year. Thus, if no update is selected, the historical research-and-development control measurement result may be reused.

Step 206: Evaluating the company's Software Security Development Life Cycle (SSDLC) level to obtain a development lifecycle evaluation score.

Step 207: Evaluating the company's Privacy by Design (PbD) design process level to obtain a privacy design process evaluation score. The dynamic measurement portion is then started.

Step 208: Selecting the legal requirements of the target country or region where the smart home product is to be launched and determining the legal privacy-security score accordingly.

Step 209: Selecting the product type of the smart home device under evaluation to obtain a product privacy protection requirement score.

The score is determined based on the mapping relationship between the product type and the required degree of privacy protection.

Step 210: Selecting the currently adopted or planned privacy-security protection technologies of the smart home device to obtain a privacy-security technology score.

The score is obtained based on a predefined mapping relationship among the type, strength, quantity, and security scoring of the privacy-security protection technologies.

Step 211: Performing compliance risk detection on the smart home device to obtain a compliance risk privacy-security score.

The risk may be automatically detected to obtain a score. For example, compliance risk test cases may be configured and executed, and the average score of the test cases may be calculated to obtain the compliance risk privacy-security score.

Step 212: Performing weighted calculation on the management system evaluation score, model evaluation score, development lifecycle evaluation score, privacy design process evaluation score, legal privacy-security score, product privacy protection requirement score, privacy-security technology score, and compliance risk privacy-security score to obtain the final privacy protection degree score.

For example:

Privacy Protection Degree Score = [(management system evaluation score × 0.8 + model evaluation score × 0.2) × 0.5 (development lifecycle evaluation score × 0.5 + privacy design process evaluation score × 0.5) × 0.5] × 0.5+ [compliance risk privacy-security score × 0.4+ privacy-security technology score × 0.4 +legal privacy-security score × 0.1 + product privacy protection requirement score × 0.1] × 0.5.

Step 213: Displaying the privacy protection degree score of the smart home device along with scores of each dimension and the privacy protection items that can be improved.

The privacy protection items that can be improved refer to items with relatively low scores.

Step 214: Determining whether to recompute the current evaluation score based on the items that can be improved, and repeating steps 208-213 until no further improvements are identified.

It will be understood that embodiments of the present disclosure combine multiple privacy protection evaluation methods and security development processes, enabling a more comprehensive understanding of privacy deficiencies of the product. Measures of different cost levels may be adopted according to need to evaluate the degree of privacy protection and determine whether local legal and regulatory requirements are satisfied.

To facilitate better implementation of the device privacy management method of the present disclosure, a device privacy management apparatus based on the above method is further provided. The meanings of the terms used herein correspond to those used in the device privacy management method, and the specific implementation details may refer to the method embodiments described above.

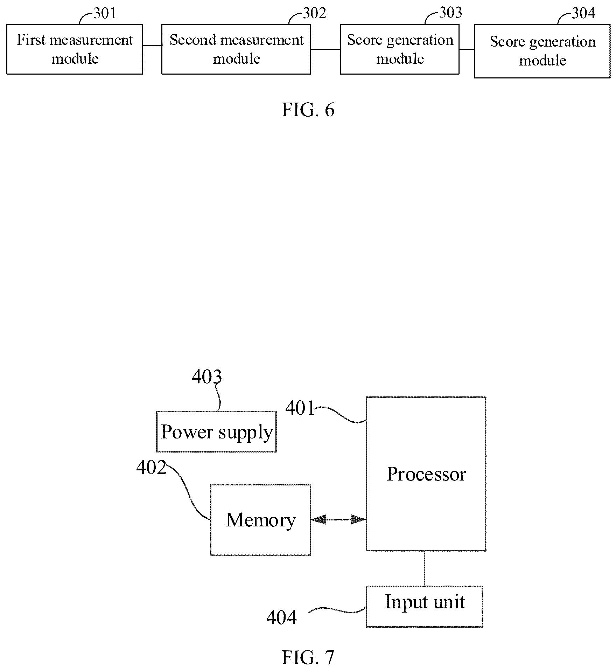

With reference to FIG. 6, FIG. 6 illustrates a block diagram of the device privacy management apparatus according to embodiments of the present disclosure. The device privacy management apparatus comprises a first measurement module 301, a second measurement module 302, a score generation module 303, and a privacy management module 304.

The first measurement module 301 is configured to perform a privacy protection level measurement on a device under test to obtain a first privacy measurement result.

The second measurement module 302 is configured to perform a privacy management level measurement on a supplier associated with the device under test to obtain a second privacy measurement result.

The score generation module 303 is configured to generate a privacy protection degree score of the device under test based on the first privacy measurement result, the second privacy measurement result, and a preset scoring weight.

The privacy management module 304 is configured to upgrade the privacy protection of the device under test based on the privacy protection degree score.

In some embodiments of the present disclosure, the first measurement module 301 comprises an acquisition unit and a first generation unit.

The acquisition unit is configured to acquire a privacy security score of the device under test for a privacy protection item.

The first generation unit is configured to generate the first privacy measurement result based on a score sub-weight corresponding to the privacy protection item and the privacy security score corresponding to the privacy protection item.

The privacy protection item includes a product compliance risk test item, a product privacy-security protection technology test item, a product adaptation-to-law test item, or a product privacy protection requirement degree test item.

In some embodiments of the present disclosure, when the privacy protection item is the product compliance risk test item, the acquisition unit comprises a configuration sub-unit, a testing sub-unit, a first calculation sub-unit, and a first generation sub-unit.

The configuration sub-unit is configured to configure compliance risk test cases.

The testing sub-unit is configured to test the device under test based on the compliance risk test cases to obtain a compliance risk test result, the compliance risk test result corresponding to a risk-level score.

The first calculation sub-unit is configured to calculate an average value of the risk-level scores corresponding to the compliance risk test cases to obtain an average risk-level score.

The first generation sub-unit is configured to use the average risk-level score as the privacy security score of the device under test for the product compliance risk test item.

In some embodiments of the present disclosure, when the privacy protection item is the product privacy-security protection technology test item, the acquisition unit comprises a first determination sub-unit, a second determination sub-unit, an obtaining sub-unit, a third determination sub-unit, a second calculation sub-unit, and a second generation sub-unit.

The first determination sub-unit is configured to identify privacy-security protection technology items supported by the device under test.

The second determination sub-unit is configured to determine, for each privacy-security protection technology item, a type, strength, and quantity of the privacy-security protection technology applied.

The obtaining sub-unit is configured to obtain a preset mapping relationship set, the preset mapping relationship set comprising mapping relationships among preset types, strengths, and quantities of the privacy-security protection technologies and corresponding security scores.

The third determination sub-unit is configured to determine a security score based on the preset mapping relationship set and based on the type, strength, or quantity of the privacy-security protection technology applied by each privacy-security protection technology item.

The second calculation sub-unit is configured to calculate an average value of the security scores of the privacy-security protection technology items to obtain an average security score.

The second generation sub-unit is configured to use the average security score as the privacy security score of the device under test for the product privacy-security protection technology test item.

In some embodiments of the present disclosure, when the privacy protection item is the product adaptation-to-law test item, the acquisition unit comprises a region determination sub-unit, a baseline determination sub-unit, and a score determination sub-unit.

The region determination sub-unit is configured to determine a target region where the device under test is to be launched.

The baseline determination sub-unit is configured to determine a target legal baseline required by the target region.

The score determination sub-unit is configured to determine the privacy security score of the device under test based on a comparison between an actual legal baseline currently satisfied by the device and the target legal baseline.

In some embodiments of the present disclosure, the second measurement module 302 comprises a supplier determination unit, a management-level determination unit, a first matching unit, a second matching unit, a research-and-development-level determination unit, and a second generation unit.

The supplier determination unit is configured to determine the supplier associated with the device under test.

The management-level determination unit is configured to measure the privacy management level of the supplier based on a reference privacy information management system and a privacy maturity model to obtain a privacy management level score.

The first matching unit is configured to match a reference Software Security Development Life Cycle (SSDLC) with the actual software security development lifecycle of the device under test to obtain a first matching result.

The second matching unit is configured to match a reference Privacy by Design (PbD) research-and-development privacy protection design process with the actual research-and-development privacy protection design process of the device under test to obtain a second matching result.

The research-and-development-level determination unit is configured to obtain a research-and-development design privacy control score based on the first matching result and the second matching result.

The second generation unit is configured to generate the second privacy measurement result based on the privacy management level score and the research-and-development design privacy control score.

In some embodiments of the present disclosure, the privacy management module 304 comprises a protection-technology determination unit, a protection-technology modification unit, a measurement-result updating unit, a score updating unit, and privacy management sub-unit.

The protection-technology determination unit is configured to determine the current privacy protection technology corresponding to a privacy protection item of the device under test when the privacy protection degree score does not satisfy a scoring threshold.

The protection-technology modification unit is configured to modify the current privacy protection technology to obtain a target privacy protection technology.

The measurement-result updating unit is configured to perform a new measurement based on the target privacy protection technology to obtain an updated first privacy measurement result.

The score updating unit is configured to multiply the updated first privacy measurement result by a first scoring weight to obtain a first protection-degree score, multiply the second privacy measurement result by a second scoring weight to obtain a second protection-degree score, and add the first protection-degree score and the second protection-degree score to obtain an updated privacy protection degree score.

The privacy management sub-unit is configured to upgrade the privacy protection of the device under test based on the updated privacy protection degree score.

In embodiments of the present disclosure, the first measurement module 301 performs a privacy protection level measurement on the device under test to obtain the first privacy measurement result.

Next, the second measurement module 302 performs a privacy management level measurement on the supplier associated with the device under test to obtain the second privacy measurement result.

The score generation module 303 then generates the privacy protection degree score of the device under test based on the first privacy measurement result, the second privacy measurement result, and a preset scoring weight.

Finally, the privacy management module 304 upgrades the privacy protection of the device under test based on the privacy protection degree score.

By measuring the privacy management level of the supplier to obtain the second privacy measurement result, and by generating the privacy protection degree score based on both the second privacy measurement result and the first privacy measurement result related to the device itself, embodiments of the present disclosure enrich the evaluation dimensions for product privacy protection. Compared with conventional evaluation schemes that only assess the privacy level of the product itself, the embodiments improve the accuracy of the privacy protection assessment results and facilitate more effective privacy and security protection management for the product.

Additionally, the present disclosure further provides an electronic device. With reference to FIG. 7, FIG. 7 illustrates a block diagram of the electronic device according to the present disclosure.

The electronic device includes a processor 401 having one or more processing cores, a memory 402 including one or more computer-readable storage media, a power supply 403, and an input unit 404. It will be understood by those skilled in the art that the structure of the electronic device illustrated in FIG. 7 does not constitute a limitation. The electronic device may include more or fewer components than illustrated, may combine certain components, or may adopt different component layouts.

The processor 401 serves as the control center of the electronic device. Through various interfaces and circuitry, the processor 401 connects to the different parts of the electronic device. By executing software programs and/or modules stored in the memory 402, and by accessing data stored in the memory 402, the processor 401 performs various device functions and executes data processing.

Optionally, the processor 401 may include one or more processing cores. Preferably, the processor 401 may integrate an application processor and a modem processor. The application processor primarily handles operating systems, user interfaces, and application programs, whereas the modem processor mainly handles wireless communication. It will be understood that the modem processor may alternatively be implemented separately rather than integrated into the processor 401.

The memory 402 may be used to store software programs and modules. Processor 401 executes various function applications and performs device privacy management by running the programs and modules stored in the memory 402. The memory 402 may include program storage region and data storage region. The program storage region is configured to store operating systems and application programs required for various functions (such as audio playback and video playback). The data storage region is configured to store data generated during use of the electronic device. The memory 402 may further include high-speed random-access memory and non-volatile memory such as one or more magnetic storage devices, flash memory devices, or other solid-state storage devices. Correspondingly, the memory 402 may further include a memory controller to provide the processor 401 with access to the memory 402.

The electronic device also includes the power supply 403 for supplying electrical power to its various components. Preferably, the power supply 403 may be logically connected to the processor 401 through a power management system, enabling power management functions such as charging, discharging, and power consumption control. The power supply 403 may include one or more DC or AC power sources, rechargeable systems, power-failure detection circuits, power converters or inverters, and power-status indicators.

The electronic device may further include the input unit 404. The input unit 404 may be used to receive numeric or character input and generate signals related to user settings or functional control, such as from a keyboard, mouse, joystick, optical sensor, or trackball.

Although not illustrated, the electronic device may also include a display unit or other components, which are not described here for simplicity.

In the present embodiment, the processor 401 executes instructions to load one or more executable files corresponding to application processes into the memory 402. The processor 401 executes the application programs stored in the memory 402 to implement steps of any of the device privacy management methods described herein.

These steps include: performing a privacy protection level measurement on the device under test to obtain a first privacy measurement result; performing a privacy management level measurement on the supplier associated with the device under test to obtain a second privacy measurement result; generating a privacy protection degree score of the device under test based on the first and second privacy measurement results and preset scoring weights; upgrading the privacy protection of the device under test based on the privacy protection degree score. By incorporating the supplier's privacy management level into the measurement to obtain the second privacy measurement result, and generating the privacy protection degree score based on both the second privacy measurement result and the first privacy measurement result related to the product itself, the present disclosure enriches the evaluation dimensions of product privacy protection and improves the accuracy of privacy protection assessment results compared with conventional schemes that consider only product-level privacy. This facilitates effective privacy and security protection management for the product.

Those skilled in the art will understand that all or part of the steps of the methods described in the embodiments may be implemented by executing instructions. These instructions may be stored on a computer-readable storage medium and executed by a processor to perform the corresponding hardware control.

Accordingly, the present disclosure provides a storage medium including a computer-readable storage medium storing a computer program. When the program is loaded and executed by a processor, the steps of any of the device privacy management methods described herein are performed.

Examples of the computer-readable storage medium include a Read-Only Memory (ROM), a Random-Access Memory (RAM), magnetic disks, optical disks, a flash memory, and other storage devices.

Because the instructions stored in the computer-readable storage medium can implement the steps of any of the device privacy management methods of the present disclosure, the advantageous effects described in the foregoing embodiments can also be achieved.

The foregoing describes the device privacy management method, apparatus, electronic device, and storage medium provided in the present disclosure. The embodiments use specific examples to explain the principles and implementation methods. The embodiments are intended to facilitate understanding of the invention rather than limit it. Those skilled in the art may implement modifications and variations based on the concept of the present disclosure, and such modifications fall within the scope of the present disclosure.

It will further be understood that, in specific embodiments of the present disclosure, configuration data of the device under test (including compliance risk data, legal adaptation data, privacy-security protection technologies, product type, etc.) and relevant information of the corresponding enterprise (including enterprise name, privacy management level, development lifecycle, and privacy design process) may be involved. When the above embodiments are applied to actual products or technologies, user permission or consent must be obtained, and the collection, use, and processing of relevant data must comply with the applicable laws, regulations, and standards of the corresponding jurisdictions.

## Claims

1. A device privacy management method, comprising:

   performing a privacy protection level measurement on a device under test to obtain a first privacy measurement result;
   performing a privacy management level measurement on a supplier associated with the device under test to obtain a second privacy measurement result;
   generating a privacy protection degree score for the device under test based on the first privacy measurement result, the second privacy measurement result, and a preset scoring weight; and
   upgrading privacy protection of the device under test based on the privacy protection degree score.

2. The method of claim 1, wherein the performing the privacy protection level measurement on the device under test comprises:

   acquiring a privacy security score of the device under test for a privacy protection item; and
   generating the first privacy measurement result based on a score sub-weight corresponding to the privacy protection item and the privacy security score;
   wherein the privacy protection item comprises: a product compliance risk test item, a product privacy-security protection technology test item, a product adaptation-to-law test item, or a product privacy protection requirement degree test item.

3. The method of claim 2, wherein when the privacy protection item is the product compliance risk test item, acquiring the privacy security score comprises:

   configuring compliance risk test cases;
   testing the device under test using the compliance risk test cases to obtain a compliance risk test result corresponding to a risk level score;
   calculating an average value of the risk level scores of the compliance risk test cases to obtain an average risk level score; and
   using the average risk level score as the privacy security score of the device under test for the product compliance risk test item.

4. The method of claim 2, wherein when the privacy protection item is the product privacy-security protection technology test item, acquiring the privacy security score comprises:

   identifying privacy-security protection technology items supported by the device under test;
   for each privacy-security protection technology item, determining a type, strength, and quantity of a privacy-security protection technology applied;

accessing a preset mapping relationship set comprising mapping relationships among types, strengths, and quantities of privacy-security protection technologies and security scores;

determining a security score for each privacy-security protection technology item based on the preset mapping relationship set;

calculating an average value of the security scores of the privacy-security protection technology items to obtain an average security score; and

using the average security score as the privacy security score of the device under test.

5. The method of claim 2, wherein when the privacy protection item is the product adaptation-to-law test item, acquiring the privacy security score comprises:

determining a target region in which the device under test is to be launched;

determining a target legal baseline required by the target region; and

determining the privacy security score based on an actual legal baseline currently satisfied by the device under test and the target legal baseline.

6. The method of claim 1, wherein performing the privacy management level measurement on the supplier comprises:

identifying the supplier associated with the device under test;

measuring a privacy management level of the supplier based on a reference privacy information management system and a privacy maturity model to obtain a privacy management level score;

matching a reference software security development lifecycle with an actual software security development lifecycle of the device under test to obtain a first matching result;

matching a reference research-and-development privacy protection design process with an actual research-and-development privacy protection design process of the device under test to obtain a second matching result;

determining a research-and-development design privacy control score based on the first and second matching results; and

generating the second privacy measurement result based on the privacy management level score and the research-and-development design privacy control score.

7. The method of claim 2, wherein upgrading the privacy protection of the device under test based on the privacy protection degree score comprises:

in response to the privacy protection degree score not satisfying a score threshold, identifying a current privacy protection technology corresponding to the privacy protection item of the device under test;

modifying the current privacy protection technology to obtain a target privacy protection technology;

performing a re-measurement based on the target privacy protection technology to obtain an updated first privacy measurement result;

generating an updated privacy protection degree score based on the updated first privacy measurement result and the second privacy measurement result; and

upgrading the privacy protection of the device under test based on the updated privacy protection degree score.

8. The method of claim 7, wherein generating the updated privacy protection degree score comprises:

multiplying the updated first privacy measurement result by a first scoring weight to obtain a first protection degree score;

multiplying the second privacy measurement result by a second scoring weight to obtain a second protection degree score; and

adding the first protection degree score and the second protection degree score to obtain the updated privacy protection degree score.

9. The method of claim 2, wherein acquiring the privacy security score comprises:

determining a product type of the device under test;

determining a product privacy protection requirement degree according to the product type and a mapping relationship; and

using the product privacy protection requirement degree as the privacy security score.

10. The method of claim 1, wherein the privacy protection level is a level of privacy protection of user data provided by the device during use and is determined by configuration parameters of the device during use; and
wherein the privacy management level refers to a level of privacy protection control of the supplier, the supplier being an enterprise that develops or manufactures the device.

11. The method of claim 1, wherein the preset scoring weight comprises a first scoring weight for the first privacy measurement result and a second scoring weight for the second privacy measurement result, the first scoring weight and the second scoring weight each being 50%.

12. The method of claim 4, wherein the privacy-security protection technology item comprises: data encryption, data backup and recovery, Secure Socket Layer protocol-based data transmission, a security product employed by a cloud platform, interface authentication and authorization, data desensitization, an anonymization algorithm, or differential privacy.

13. The method of claim 6, wherein determining the research-and-development design privacy control score comprises: performing a weighted computation on a first percentage corresponding to the first matching result and a second percentage corresponding to the second matching result.

14. The method of claim 6, wherein the reference privacy information management system comprises ISO27701, and the privacy maturity model comprises at least one of ISC2, NIST, GAPP, or CNIL.

15. A device privacy management apparatus, comprising:

a first measurement module configured to perform a privacy protection level measurement on a device under test to obtain a first privacy measurement result;
a second measurement module configured to perform a privacy management level measurement on a supplier associated with the device under test to obtain a second privacy measurement result;
a score generation module configured to generate a privacy protection degree score of the device under test based on the first privacy measurement result, the second privacy measurement result, and a preset scoring weight; and
a privacy management module configured to upgrade privacy protection of the device under test based on the privacy protection degree score.

16. The apparatus of claim 15, wherein the first measurement module comprises:

an acquisition unit configured to acquire a privacy security score of the device under test for a privacy protection item; and
a first generation unit configured to generate the first privacy measurement result based on a score sub-weight corresponding to the privacy protection item and the privacy security score;
wherein the privacy protection item comprises: a product compliance risk test item, a product privacy-security protection technology test item, a product adaptation-to-law test item, or a product privacy protection requirement degree test item.

17. The apparatus of claim 16, wherein the privacy protection item is the product compliance risk test item, and wherein the acquisition unit comprises:

a configuration sub-unit configured to configure compliance risk test cases;
a testing sub-unit configured to test the device under test according to the compliance risk test cases to obtain a compliance risk test result corresponding to a risk level score;
a first calculation sub-unit configured to calculate an average value of the risk level scores corresponding to the compliance risk test cases to obtain an average risk level score; and
a first generation sub-unit configured to use the average risk level score as the privacy security score of the device under test for the product compliance risk test item.

18. The apparatus of claim 16, wherein the privacy protection item is the product privacy-security protection technology test item, and wherein the acquisition unit comprises:

a first determination sub-unit configured to identify privacy-security protection technology items supported by the device under test;

a second determination sub-unit configured to determine, for each privacy-security protection technology item, a type, strength, and quantity of a privacy-security protection technology applied by the privacy-security protection technology item;

an obtaining sub-unit configured to obtain a preset mapping relationship set comprising mapping relationships among a preset type, strength, and quantity of the privacy-security protection technologies and security scores;

a third determination sub-unit configured to determine a security score based on the preset mapping relationship set and based on the type, strength, or quantity of the privacy-security protection technology applied by each privacy-security protection technology item;

a second calculation sub-unit configured to calculate an average value of security scores of the privacy-security protection technology items to obtain an average security score; and

a second generation sub-unit configured to use the average security score as the privacy security score of the device under test for the product privacy-security protection technology test item.

19. An electronic device, comprising a memory, a processor, and instructions stored in the memory and executable by the processor to implement the device privacy management as claimed in any one of claims 1-14.

20. A computer-readable storage medium storing computer program executable by a processor to implement the device privacy management as claimed in any one of claims 1-14.

FIG. 1

Measuring the privacy management level of the supplier associated with the device under test to obtain the second privacy measurement result — 101

Measuring the privacy protection level of the device under test to obtain the first privacy measurement result — 102

Generating the privacy protection degree score of the device under test based on the first privacy measurement result, the second privacy measurement result, and preset scoring weights — 103

Generating the privacy protection degree score of the device under test based on the first privacy measurement result, the second privacy measurement result, and preset scoring weights — 104

FIG. 2

| Privacy-Security Protection Technology Item | Security Score |
|---|---|
| Data encryption | 1-5 |
| Data backup and recovery | 4 |
| Secure Socket Layer data transmission | 2 |
| Security products adopted by cloud platform | 1-5 |
| Interface authentication and authorization | 2 |
| Data desensitization | 1 |
| Anonymization algorithm | 5 |
| Differential privacy | 5 |

FIG. 3

FIG. 4

Start the privacy protection management system — 201

Update company internal-control measurement — 202

Evaluate the company's overall privacy management level according to the ISO27701 privacy management system to obtain the management system evaluation score — 203

Evaluate the company's overall privacy management level according to classical privacy maturity models to obtain the model evaluation score — 204

Update research-and-development control measurement — 205

Evaluate the company's Software Security Development Life Cycle (SSDLC) level to obtain the development lifecycle evaluation score — 206

Evaluate the company's Privacy by Design (PbD) level to obtain the privacy design process evaluation score — 207

Select the laws of the country where the smart home product will be launched and determine the legal privacy-security score — 208

Select the smart home product type to obtain the product privacy protection requirement score — 209

Select the current or planned privacy-security protection technologies for the product and obtain the privacy-security technology score — 210

Perform compliance risk detection on the smart home product to obtain the compliance risk privacy-security score — 211

The management system evaluation score, model evaluation score, R&D cycle evaluation score, privacy design process evaluation score, legal privacy security score, product privacy protection requirement score, privacy security technical security score and compliance risk privacy security score are weighted and calculated to obtain the privacy protection degree score — 212

Display the privacy protection degree score of the smart home product, as well as scores for each dimension and items that may be improved — 213

Determine whether to recalculate the evaluation score based on items requiring improvement — 214

FIG. 5

| First measurement module | Second measurement module | Score generation module | Score generation module |
|---|---|---|---|
| 301 | 302 | 303 | 304 |

FIG. 6

FIG. 7

## INTERNATIONAL SEARCH REPORT

| International application No. |
| --- |
| **PCT/CN2024/095704** |

**A. CLASSIFICATION OF SUBJECT MATTER**

G06F 21/60(2013.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNKI, CNTXT, USTXT, EPTXT, WOTXT, VEN, CNABS, IEEE, BING: 隐私保护, 设备, 得分, 第二, 供应商, 加权, 权重, privacy protection, device, score, second, provider, weight

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117407892 A (SHENZHEN TCL NEW TECHNOLOGY CO., LTD.) 16 January 2024 (2024-01-16) <br> description, paragraphs [0005]-[0051] and [0061]-[0222], and figures 1-7 | 1-20 |
| Y | CN 113221161 A (ZHU HONGDONG) 06 August 2021 (2021-08-06) <br> description, paragraphs [0026], [0044], and [0065]-[0069], figures 1-4, and claim 10 | 1-20 |
| Y | HUAWEI TECHNOLOGIES CO., LTD. "华为隐私保护治理白皮书 (Huawei Privacy Protection Whitepaper)" <br> *https://www.huawei.com/cn/news/2022/11/huawei-privacy-protection-whitepaper,* 09 November 2022 (2022-11-09), <br> page 10, section 3.3 | 1-20 |
| A | CN 114357509 A (SHENZHEN TCL NEW TECHNOLOGY CO., LTD.) 15 April 2022 (2022-04-15) <br> entire document | 1-20 |
| A | CN 109716345 A (PRIVITAR LTD.) 03 May 2019 (2019-05-03) <br> entire document | 1-20 |

✓ Further documents are listed in the continuation of Box C.    ✓ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **15 August 2024** | **20 August 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/095704** |

### C. DOCUMENTS CONSIDERED TO BE RELEVANT

| Category* | Citation of document, with indication, where appropriate, of the relevant passages | Relevant to claim No. |
| --- | --- | --- |
| A | CN 111400747 A (XI'AN JIAOTONG UNIVERSITY) 10 July 2020 (2020-07-10)<br>entire document | 1-20 |
| A | US 2014173684 A1 (NYMITY, INC.) 19 June 2014 (2014-06-19)<br>entire document | 1-20 |

Form PCT/ISA/210 (second sheet) (July 2022)

**INTERNATIONAL SEARCH REPORT**
Information on patent family members

International application No.

**PCT/CN2024/095704**

| Patent document cited in search report | | | Publication date (day/month/year) | Patent family member(s) | | | Publication date (day/month/year) |
|---|---|---|---|---|---|---|---|
| CN | 117407892 | A | 16 January 2024 | None | | | |
| CN | 113221161 | A | 06 August 2021 | None | | | |
| CN | 114357509 | A | 15 April 2022 | None | | | |
| CN | 109716345 | A | 03 May 2019 | SG | 11201809476 | VA | 29 November 2018 |
| | | | | US | 2020327252 | A1 | 15 October 2020 |
| | | | | US | 11698990 | B2 | 11 July 2023 |
| | | | | EP | 3449414 | A1 | 06 March 2019 |
| | | | | EP | 3449414 | B1 | 08 December 2021 |
| | | | | WO | 2017187207 | A1 | 02 November 2017 |
| | | | | US | 2023359770 | A1 | 09 November 2023 |
| CN | 111400747 | A | 10 July 2020 | None | | | |
| US | 2014173684 | A1 | 19 June 2014 | US | 8966575 | B2 | 24 February 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310707303